(19) Europäisches Patentamt European Patent Office Office européen des brevets

(11) **EP 3 623 729 A1**

(12) **EUROPEAN PATENT APPLICATION**
published in accordance with Art. 153(4) EPC

(43) Date of publication:
**18.03.2020 Bulletin 2020/12**

(21) Application number: **18798662.5**

(22) Date of filing: **29.03.2018**

(51) Int Cl.:
*F25D 11/00* (2006.01)     *F25B 1/00* (2006.01)
*F25B 27/00* (2006.01)

(86) International application number:
**PCT/JP2018/013175**

(87) International publication number:
**WO 2018/207491 (15.11.2018 Gazette 2018/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **09.05.2017 JP 2017093263**

(71) Applicant: **Denso Corporation**
**Kariya-city**
**Aichi 448-8661 (JP)**

(72) Inventor: **NISHIDA Yasushi**
**Kariya-city**
**Aichi 448-8661 (JP)**

(74) Representative: **TBK**
**Bavariaring 4-6**
**80336 München (DE)**

(54) **REFRIGERATION DEVICE**

(57) Electric power generated by a generator (32) driven by an engine (31) is converted into an alternating current of any arbitrary frequency by an inverter (33). A compressor (11) of a refrigeration cycle (10) includes a motor (16) driven by power supplied from the inverter (33) and a refrigerant compression unit (17) rotatably driven by the motor (16) to suck in, compress, and discharge refrigerant. A mode changeover switch (44) is switchable between a start/stop operation mode that allows the engine (31) to start and stop, and a continuous operation mode in which the engine (31) is continuously operated. When the start/stop operation mode is selected by the mode changeover switch (44), the controller (40) controls the inverter (33) such that the target rotation speed of the compressor (11) is fixed at a high rotation speed which is higher than the rotation speed according to the difference between the set temperature (Tset) and the internal temperature (Tret).

**FIG. 3**

**Description**

CROSS REFERENCE TO RELATED APPLICATIONS

This application is based on Japanese Patent Application No. 2017-93263 filed on May 9, 2017, the disclosure of which is incorporated herein by reference.

TECHNICAL FIELD

The present disclosure relates to a refrigeration device.

BACKGROUND

Conventionally, refrigeration devices are known to be provided with an engine and a generator for generating electric drive power for a motor etc. of a compressor included in a refrigerating cycle.

A refrigeration device described in Patent Document 1 controls the rotation speed of an engine according to the heat load of a refrigeration cycle calculated based on the difference between an internal temperature and a set temperature. Due to this, electric power according to the rotation speed of the engine is supplied from the generator to the motor of a compressor, and the cooling capacity of the refrigeration cycle is adjusted according to the rotation speed of the compressor. As a result, this refrigeration device can adjust cooling capacity according to the heat load of the refrigeration cycle without needing to provide an inverter in the electric circuit connecting the generator and the compressor.

PRIOR ART DOCUMENTS

PATENT LITERATURE

Patent Document 1: JP 2013-2803A

SUMMARY OF INVENTION

However, since the refrigeration device described in Patent Document 1 controls the engine speed according to the heat load of the refrigeration cycle, the engine does not stop. As a result, there are concerns of excess fuel consumption in the engine leading to decreased fuel efficiency.

It should be noted that in a refrigeration system equipped with an engine for power generation, when an inverter is installed in the electric circuit between the generator and the compressor, it is possible to control the rotation speed of the compressor with the inverter according to the heat load of the refrigeration cycle.. However, even in this case, if the engine operation is continued without stopping the engine, the fuel consumption of the engine may be excessive, leading to decreased fuel efficiency.

An object of the present disclosure is to provide a refrigeration device capable of improving the fuel efficiency of a power generation engine.

According to one aspect of the present disclosure, a refrigeration device that cools air in an internal space includes an engine for power generation, a generator driven by the engine to generate electricity, an inverter that generates an alternating current of a variable frequency from the electric power generated by the generator, a compressor including a motor driven by power supplied from the inverter and a refrigerant compression unit rotatably driven by the motor to suck in, compress, and discharge refrigerant, a radiator that dissipates heat from the refrigerant discharged from the compressor by exchanging heat between the refrigerant and outside air, an expansion valve that depressurizes the refrigerant that flows out of the radiator, an evaporator that cools the air in the internal space by exchanging heat between the refrigerant that flows out of the expansion valve and the air in the internal space, the evaporator causing the evaporated refrigerant to flow out toward the compressor, a mode changeover switch switchable between a start/stop operation mode that allows the engine to start and stop and a continuous operation mode in which the engine is continuously operated, and a controller that controls the inverter such that when the start/stop operation mode is selected by the mode changeover switch, a target rotation speed of the compressor is fixed at a high rotation speed which is higher than a rotation speed according to a difference between a set temperature and an internal temperature.

Accordingly, when the start/stop operation mode is selected by the mode changeover switch, the target rotation speed of the compressor is fixed at a high rotation speed which is higher than the rotation speed according to the difference between the set temperature and the internal temperature. As a result, the internal temperature may be cooled to or below the set temperature within a short period of time. Here, a "high rotation speed higher than the rotation speed corresponding to the difference between the set temperature and the internal temperature" refers to a rotation speed higher than the rotation speed that would be used during the continuous operation mode. Therefore, the amount of time that the engine is operated for until the internal temperature falls to or below the set temperature is reduced, and the amount of time that the engine is stopped for is increased relatively. Accordingly, the refrigeration device can reduce the fuel consumption of the engine and improve fuel efficiency when the start/stop operation mode is selected.

The reference numerals in parentheses attached to the components and the like indicate an example of correspondence between the components and the like and specific components and the like described in an embodiment to be described below.

BRIEF DESCRIPTION OF DRAWINGS

FIG. 1 is a schematic diagram of a refrigeration vehicle equipped with a refrigeration device according to a first embodiment.
FIG. 2 is a configuration diagram of a refrigeration device according to a first embodiment.
FIG. 3 is a flowchart illustrating a control method of a refrigeration device in a first embodiment.
FIG. 4 is a configuration diagram of a refrigeration device according to a second embodiment.

DETAILED DESCRIPTION

Hereinafter, embodiments of the present disclosure will be described with reference to the drawings. In the following embodiments, the same or equivalent parts are denoted by the same reference numerals.

(First Embodiment)

A first embodiment will be described with reference to the drawings. In this embodiment, an example in which a refrigeration device is applied to a refrigeration vehicle will be described.

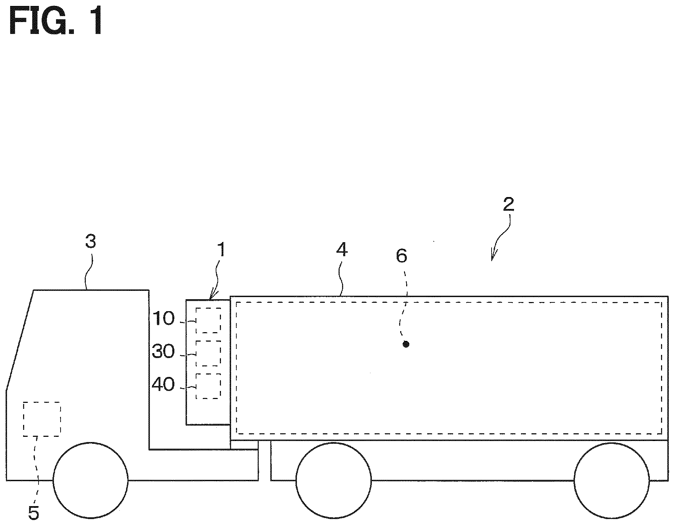

As shown in FIG. 1, a refrigeration device 1 is applied to a refrigeration vehicle 2. The refrigeration vehicle includes a tractor 3 and a trailer 4. The tractor 3 is equipped with a vehicle propulsion engine 5. The tractor 3 is a towing vehicle that pulls the trailer 4.

The trailer 4 is formed with an interior space 6 for storing cargo such as frozen food products. The refrigeration device 1 of the present embodiment is a modular unit, and is attached to a portion of the trailer 4 that faces the tractor 3. The refrigeration device 1 adjusts the temperature of the interior space 6 of the trailer 4.

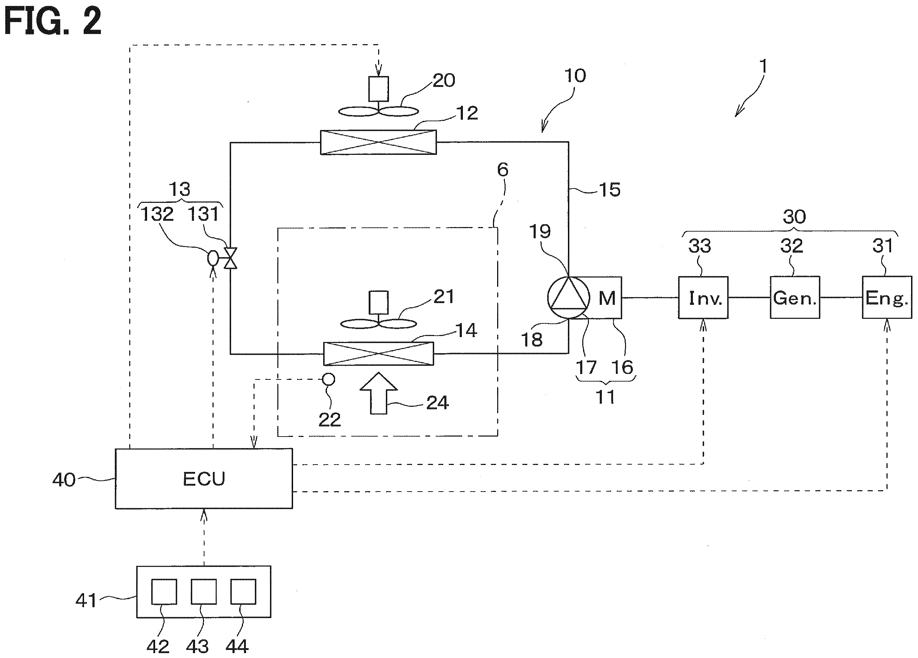

As shown in FIG. 2, the refrigeration device 1 includes a refrigeration cycle 10, a power supply unit 30 that supplies power to each component of the refrigeration cycle 10, a controller 40 that controls the operation of these components, an operation panel 41, and the like.

First, the refrigeration cycle 10 will be described. The refrigeration cycle 10 is a vapor compression refrigerator in which a compressor 11, a radiator 12, an expansion valve 13, an evaporator 14, and the like are connected by piping 15.

The compressor 11 is an electric compressor, and includes an electric motor 16 and a refrigerant compression unit 17 that is rotationally driven by the motor 16. The rotation speed of the motor 16 is controlled by the frequency of the alternating current supplied from an inverter 33 included in the power supply unit 30. The refrigerant compression unit 17 is configured to compress refrigerant sucked from a refrigerant suction port 18 and to discharge the refrigerant from a refrigerant discharge port 19. The refrigerant compression unit 17 is a fixed capacity compression mechanism whose refrigerant discharge capacity per rotation is fixed. The refrigerant compression unit 17 rotates in synchronization with the rotation of the motor 16. Therefore, the rotation speed of the refrigerant compression unit 17 is also controlled by the frequency of the alternating current supplied from the inverter 33 included in the power supply unit 30 to the motor 16. In the following description, the rotation of the compressor 11 refers to the rotation of both the motor 16 and the refrigerant compression unit 17.

A refrigerant inlet of the radiator 12 is connected to the refrigerant discharge port 19 side of the refrigerant compression unit 17 included in the compressor 11 via the piping 15. The radiator 12 is a heat exchanger that dissipates heat from the refrigerant by exchanging heat the refrigerant and outside air. The outside air is blown from a radiator blower 20. The refrigerant is discharged from the refrigerant compression unit 17 of the compressor 11. The radiator blower 20 is driven by power supplied from the power supply unit 30, and blows outside air to the radiator 12.

A refrigerant inlet of the expansion valve 13 is connected to the refrigerant outlet side of the radiator 12 through the piping pipe 15. The expansion valve 13 is a decompression device that decompresses and expands the refrigerant flowing out of the radiator 12. The expansion valve 13 is an electric expansion valve including a valve body 131 configured to change a throttle opening degree and an electric actuator 132 configure to change the throttle opening degree of the valve body 131. The electric actuator 132 is driven in accordance with a control signal output from the controller 40. Therefore, the opening degree of the expansion valve 13 is controlled according to the control signal output from the controller 40.

A refrigerant inlet of the evaporator 14 is connected to the refrigerant outlet side of the expansion valve 13 via the piping 15. The evaporator 14 is a heat exchanger that exchanges heat between the air inside the interior space, which is circulated by an evaporator blower 21, and the refrigerant that flows out of the expansion valve 13. The evaporator blower 21 is driven by power supplied from the power supply unit 30, and blows air in the interior space to the evaporator 14. The air blown to the evaporator 14 by the evaporator blower 21 is cooled by endothermic action due to latent heat of evaporation of the refrigerant flowing through the evaporator 14. In FIG. 2, the flow direction of the air blown to the evaporator 14 by the operation of the evaporator blower 21 is indicated by the arrow having the reference numeral 24.

The refrigerant outlet side of the evaporator 14 is connected to the refrigerant suction port 18 of the refrigerant compression unit 17 included in the compressor 11 via the piping 15. Therefore, the refrigerant that flows out of the refrigerant outlet of the evaporator 14 flows toward the compressor 11 and is sucked into the refrigerant compression unit 17 included in the compressor 11.

Next, the power supply unit 30 will be described. The power supply unit 30 includes a power generation engine 31, a power generator 32 that generates power due to the operation of the engine 31, and an inverter 33 that generates an alternating current of a variable frequency from the power generated by the power generator 32.

The engine 31 is provided to supply power to each component of the refrigeration cycle 10, and is separate from the vehicle propulsion engine 5 of the tractor 3. The engine 31 is a constant speed engine that is maintained at a constant rotation speed under the control of the controller 40. Further, the rotation speed of the engine 31 can be switched between at least two different levels, including high rotation speed and low rotation speed, under the control of the controller 40. In general, the controller 40 controls the engine 31 to rotate at a high speed when the difference between an internal temperature Tret and a set temperature Tset is large, such as immediately after the start of the refrigeration device 1, to rapidly lower the internal temperature Tret. Thereafter, upon reaching a predetermined temperature difference between the internal temperature Tret and the set temperature Tset, the controller 40 controls the engine 31 to rotate at a low speed.

The generator 32 is directly or indirectly connected to the output shaft of the engine 31 and generates power using the power of the engine 31. That is, the generator 32 may be directly connected to the output shaft of the engine 31 or may be connected via a power transmission mechanism such as a pulley and a belt. The electric power generated by the generator 32 is supplied to the motor 16 of the compressor 11 via the inverter 33. Although not shown, the power generated by the generator 32 is also supplied to the radiator blower 20 and the evaporator blower 21.

The inverter 33 is an electric circuit that generates an alternating current of a variable frequency from the power generated by the generator 32 in accordance with a control signal transmitted from the controller 40. The alternating current generated by the inverter 33 is supplied to the motor 16 of the compressor 11. As a result, the motor 16 and the refrigerant compression unit 17 of the compressor 11 are driven to rotate, and the refrigerant circulates through the refrigeration cycle 10.

Next, the controller 40 and the operation panel 41 will be described.

The controller 40 includes a microcontroller having a processor for performing control processing and arithmetic processing, and a storage unit, such as a ROM and a RAM, for storing programs and data. The controller also includes peripheral circuits for these components. The storage unit of the controller 40 is a non-transitional tangible storage medium. Based on programs stored in the storage unit, the controller 40 performs various types of control processing and arithmetic processing to control the operation of devices connected to output ports of the controller 40.

Input ports of the controller 40 are electrically connected with an internal temperature sensor 22 for detecting the internal temperature, an outside air temperature sensor (not shown), and the like. The internal temperature sensor 22 of the present embodiment is a return air temperature thermistor and is provided on the upstream side of the evaporator 14. The controller 40 can detect the temperature of the internal air prior to passing through the evaporator 14 using the return air temperature thermistor.

Further, the operation panel 41, which can be operated by a user, is electrically connected to the input ports of the controller 40. The operation panel 41 is provided with an operation switch 42 for operating the refrigeration cycle 10, a temperature setting switch 43 for setting a target temperature in the refrigerator, a mode changeover switch 44 for switching the operation mode of the engine 31, and the like.

The mode changeover switch 44 provided on the operation panel 41 is configured to between a start/stop operation mode that allows the engine 31 to start and stop, and a continuous operation mode that causes the engine 31 to operate continuously.

When the start/stop operation mode is selected, the controller 40 alternates between controlling the engine 31 to operate, and controlling the engine 31 to stop operating. The start/stop operation mode reduces fuel consumption by intermittently stopping the engine 31, and is effective in improving fuel efficiency.

On the other hand, when the continuous operation mode is selected, the controller 40 controls the engine 31 to rotate continuously without stopping. The continuous operation mode is effective for precise control of the internal temperature Tret.

The engine 31, the inverter 33, the expansion valve 13, the blowers 20, 21 and the like are connected to the output port side of the controller 40. The controller 40 calculates the thermal load of the refrigeration cycle 10 based on the difference between the internal temperature Tret detected by the internal temperature sensor 22 and the set temperature Tset set by the temperature setting switch 43. When the continuous operation mode is selected, the controller 40 outputs a control signal to the inverter 33 so that the rotation speed of the compressor 11 reaches a value corresponding to the thermal load. On the other hand, when the start/stop operation mode is selected, the controller 40 controls the inverter 33 such that the compressor 11 rotates at a fixed high rotation speed regardless of the heat load of the refrigeration cycle 10. Specifically, the high rotation speed is higher than the rotation speed corresponding to the difference between the set temperature Tset and the internal temperature Tret. Here, a "high rotation speed higher than the rotation speed corresponding to the difference between the set temperature Tset and the internal temperature Tret" refers to a rotation speed higher than the rotation speed that would be used during the continuous operation mode. As an example, the controller 40 may output a control signal to the inverter 33 so that the target rotation speed of the compressor 11 is within a maximum rotation speed region. Here, the maximum rotation speed region refers to a range of rotation speeds from approximately 20% higher to approximately 20% lower than the designed maximum rotation speed of the compressor 11. In this way, the frequency of the alternating current supplied from the inverter 33 to the motor 16 of the compressor 11 is controlled. Therefore, the controller 40 can control the rotation speed of the compressor 11 via the inverter 33.

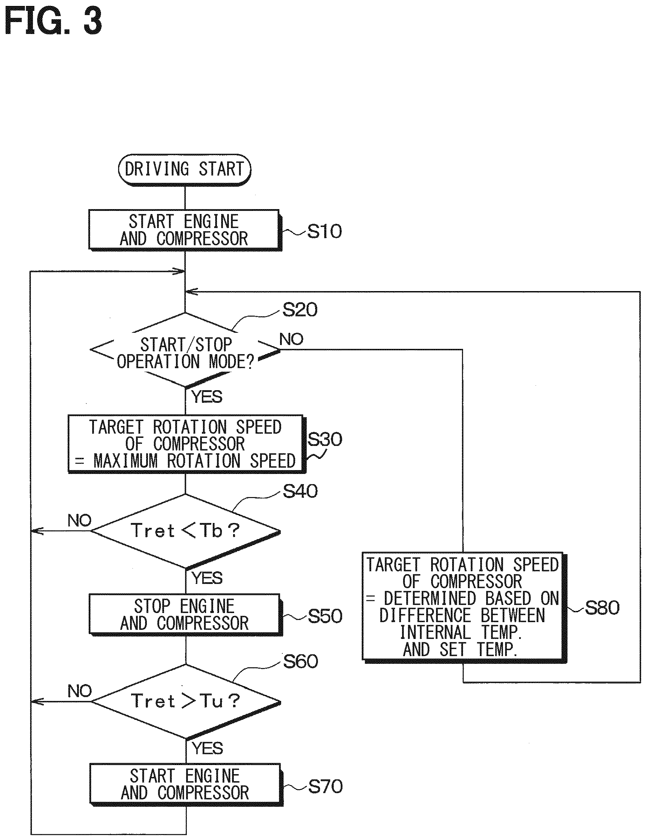

Next, the operation of the refrigeration device 1 of the present embodiment will be described. FIG. 3 is a flowchart showing a control process executed by the controller 40 included in the refrigeration device 1 of the present embodiment. The processing is performed when the controller 40 executes control programs stored in the storage unit.

Operation of the refrigeration device 1 is started when the user operates the operation switch 42 of the operation panel 41. The controller 40 reads the set temperature Tset, which is set by the temperature setting switch 43, the operation mode of the engine 31, which is set by the mode switch 44, the internal temperature Tret detected by the internal temperature sensor 22, and the like.

In step S10, the controller 40 starts the engine 31. At the same time, the generator 32 connected to the engine 31 begins to generate power, and electric power is supplied from the inverter 33 to the motor 16 of the compressor 11. As a result, the compressor 11 is started.

In step S20, the controller 40 determines whether the operation mode of the engine 31 is the start/stop operation mode or the continuous operation mode. When the operation mode of the engine 31 is the start/stop operation mode, the process proceeds to step S30.

In step S30, the controller 40 outputs a signal for driving the engine 31, and controls the engine 31 to rotate at a constant speed. The controller 40 controls the inverter 33 such that the target rotation speed of the compressor 11 is fixed at a high rotation speed that is higher than the rotation speed corresponding to the difference between the set temperature Tset and the internal temperature Tret. Here, a "high rotation speed higher than the rotation speed corresponding to the difference between the set temperature Tset and the internal temperature Tret" refers to a rotation speed higher than the rotation speed that would be used during the continuous operation mode. As an example, the controller 40 may control the inverter 33 so that the target rotation speed of the compressor 11 is within a maximum rotation speed region. As a result, the refrigerating capacity of the refrigerating cycle 10 is increased, and the internal temperature Tret is decreased quickly. Therefore, the internal temperature Tret quickly falls below a first threshold temperature Tb. Accordingly, in the control by the refrigerating device 1, when the start/stop operation mode is selected, it is possible to reduce the operation time of the engine 31, thereby relatively increasing amount of time the engine 31 is stopped.

Subsequently, in step S40, the controller 40 determines whether or not the internal temperature Tret is lower than the first threshold temperature Tb.

Here, the first threshold temperature Tb is a value defined by the following Equation 1.

$$Tb = Tset - \alpha1 \text{ [Equation 1]}$$

Where Tb: first threshold temperature, Tset: set temperature, $\alpha1$: positive constant

That is, the first threshold temperature Tb is a value set lower than the set temperature Tset in the internal space by a predetermined temperature (that is, a positive constant $\alpha1$).

If it is determined in step S40 that the internal temperature Tret is higher than or equal to the first threshold temperature Tb, the process returns to step S20, and the above-described processes are repeated.

In contrast, if it is determined in step S40 that the internal temperature Tret is lower than the first threshold temperature Tb, the process proceeds to step S50.

In step S50, the controller 40 outputs a signal for stopping the engine 31. As a result, the engine 31 is stopped, and the generator 32 connected to the engine 31 stops generating power. Therefore, electric power is not supplied from the inverter 33 to the motor 16 of the compressor 11, and the operation of the compressor 11 is stopped. Since the internal space is not cooled by the refrigeration cycle 10, the internal temperature Tret gradually increases.

Next, in step S60, the controller 40 determines whether or not the internal temperature Tret is higher than a second threshold temperature Tu.

Here, the second threshold is a value defined by the following Equation 2.

$$Tu = Tset + \alpha2 \text{ [Equation 2]}$$

Where Tu: second threshold temperature, $\alpha2$: positive constant

That is, the second threshold temperature Tu is a value set higher than the set temperature Tset in the internal space by a predetermined temperature (that is, a positive constant $\alpha2$).

If it is determined in step S60 that the internal temperature Tret is lower than or equal to the second threshold temperature Tu, the process returns to step S20, and the above-described processes are repeated.

In contrast, if it is determined in step S60 that the internal temperature Tret is higher than the second threshold temperature Tu, the process proceeds to step S70.

In step S70, the controller 40 outputs a signal for starting the engine 31. As a result, the engine 31 is started again, and the generator 32 connected to the engine 31 begins generating power again. Thereafter, the process returns to step S20.

The processing from step S20 to step S70 described above is continuously executed when it is determined in step S20 that the operation mode of the engine 31 is the start/stop operation mode.

On the other hand, when it is determined in step S20 that the operation mode of the engine 31 has been switched to the continuous operation mode by a user action, the process proceeds to step S80. Note that when the operation of the refrigeration device 1 is started, the process also proceeds to step S80 when the operation mode of the engine 31 is the continuous operation mode.

In step S80, the controller 40 determines the target rotation speed of the compressor 11 according to the difference between the internal temperature Tret and the set temperature Tset. Then, the inverter 33 is controlled so that the rotation speed of the compressor 11 is adjusted toward the determined target rotation speed. As described above, when in the continuous operation mode, the refrigeration device 1 can precisely manage the internal temperature Tret by finely controlling the target rotation speed of the compressor 11.

The processing step S80 described above is continuously executed when it is determined in step S20 that the operation mode of the engine 31 is the continuous operation mode.

The refrigeration device 1 of the present embodiment can achieve the following operational effects by the configurations and control methods described above.

(1) In the present embodiment, when the start/stop operation mode is selected by the mode changeover switch 44, the controller 40 controls the inverter 33 such that the target rotation speed of the compressor 11 is fixed at a high rotation speed which is higher than the rotation speed according to the difference between the set temperature Tset and the internal temperature Tret.

Accordingly, when the start/stop operation mode is selected by the mode changeover switch 44, the target rotation speed of the compressor 11 is fixed at a high rotation speed which is higher than the rotation speed according to the difference between the set temperature Tset and the internal temperature Tret. Therefore, the internal temperature Tret is cooled to or below the set temperature Tset in a short amount of time. Therefore, the amount of time that the engine 31 is operated for until the internal temperature Tret falls to or below the set temperature Tset is reduced, and the amount of time that the engine 31 is stopped for is increased relatively. Accordingly, the refrigeration device 1 can reduce the fuel consumption of the engine 31 and improve fuel efficiency.

(2) In the present embodiment, when the start/stop operation mode is selected by the mode changeover switch 44, the controller 40 controls the inverter 33 such that the target rotation speed of the compressor 11 is within a maximum rotation speed region.

As a result, when the start/stop operation mode is selected, the target rotation speed of the compressor 11 is fixed in the maximum rotation speed region, so that the refrigeration capacity of the refrigeration cycle 10 is increased, and the internal temperature Tret is reduced quickly. Therefore, the refrigeration device 1 can reduce the fuel consumption of the engine 31 by reducing the operation time of the engine 31 and relatively increasing the stop time of the engine 31.

In general, a constant speed engine, in which the engine 31 is maintained at a constant rotation speed, has a characteristic where fuel efficiency improves as the load increases. If the compressor 11 is set to the maximum rotation speed region, the load on the engine 31 increases. Therefore, this refrigeration device 1 can improve fuel efficiency.

(3) In the present embodiment, when the continuous operation mode is selected by the mode changeover switch 44, the controller 40 controls the inverter 33 such that the target rotation speed of the compressor 11 is a rotation speed according to the difference between the set temperature Tset and the internal temperature Tret.

Due to this, when in the continuous operation mode, the refrigeration device 1 can precisely manage the internal temperature Tret by using the inverter 33 to finely control the target rotation speed of the compressor 11. Therefore, it is possible to avoid providing a suction throttle valve which would be disposed on the upstream side of the compressor 11 in a typical implementation of the refrigeration cycle 10. Further, it is possible to avoid providing an unload mechanism provided in the compressor as described in Patent Document 1 above.

(Second Embodiment)

A second embodiment will be described. In the second embodiment, the configuration of the internal temperature sensor is changed with respect to the first embodiment. The other parts of the second embodiment are the same as those in the first embodiment. Therefore, only differences from the first embodiment will be described.

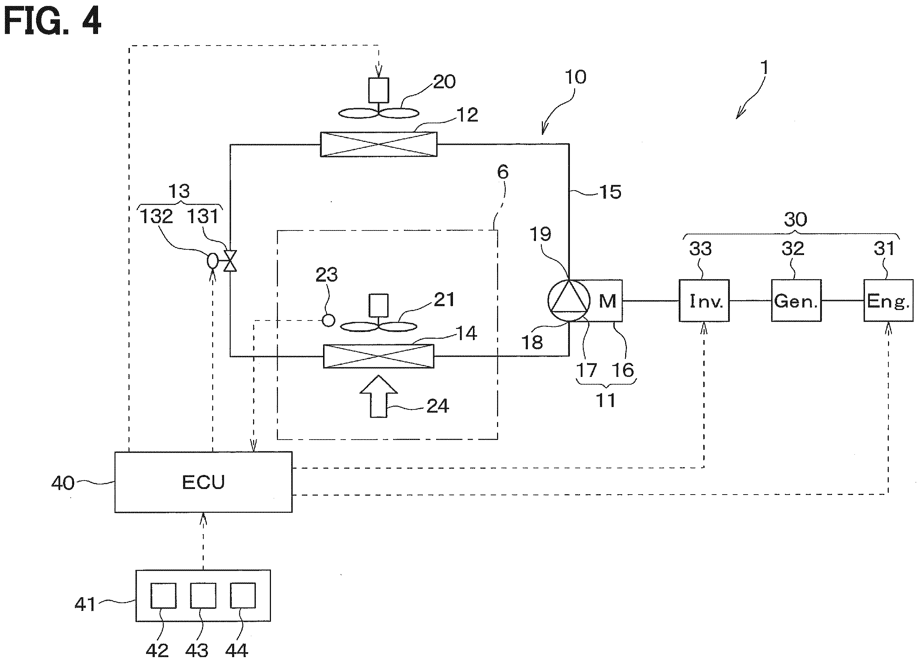

As shown in FIG. 4, in the second embodiment, an internal temperature sensor 23 provided in the refrigeration device 1 is a blown air temperature thermistor and is provided on the downstream side of the evaporator 14. The controller 40 can detect the air temperature of air which has passed through the evaporator 14 (that is, the blown air temperature) by using the blown air temperature thermistor.

In the second embodiment, when the operation mode of the engine 31 is set to the continuous operation mode, the target rotation speed of the compressor 11 is determined according to the blown air temperature detected by the internal temperature sensor 23. Therefore, in the second embodiment, the target rotation speed of the compressor 11 does not need to be determined according to the difference between the internal temperature Tret and the set temperature Tset.

The second embodiment described above can also achieve the same operational effects as the first embodiment.

(Other Embodiments)

The present disclosure is not limited to the embodiments described above, and can be modified as appropriate. The above embodiments are not independent of each other, and can be appropriately combined except when the combination is obviously impossible. Individual elements or features of a particular embodiment are not necessarily essential unless it is specifically stated that the elements or the features are essential in the foregoing description, or unless the elements or the features are obviously essential in principle. A quantity, a value, an amount, a range, or the like, if specified in the above-described example embodiments, is not necessarily limited to the specific value, amount, range, or the like unless it is specifically stated that the value, amount, range, or the like is necessarily the specific value, amount, range, or the like, or unless the value, amount, range, or the like is obviously necessary to be the specific value, amount, range, or the like in principle. Furthermore, a material, a shape, a positional relationship, or the like, if specified in the above-described example embodiments, is not necessarily limited to the specific shape, positional relationship, or the like unless it is specifically stated that the material, shape, positional relationship, or the like is necessarily the specific material, shape, positional relationship, or the like, or unless the shape, positional relationship, or the like is obviously necessary to be the specific shape, positional relationship, or the like in principle.

(1) In each of the above-described embodiments, an example is described in which the refrigeration device 1 is applied to the refrigerated vehicle 2 that transports frozen food products or the like, but the present disclosure is not limited to this. The refrigeration device 1 can be applied to other moving objects, or can be applied to a warehouse or the like.

(2) In each of the above embodiments, an example is described in which the refrigeration cycle 10 included in the refrigeration device 1 is a vapor compression type refrigeration unit, but the present disclosure is not limited to this. The refrigeration cycle 10 of the refrigeration device 1 may be another type of refrigeration unit as long as it includes the compressor 11.

(3) In each of the above-described embodiments, an example is described in which the controller 40 can switch the rotation speed of the engine 31 between at least two levels including a high rotation speed and a low rotation speed. However, the present disclosure is not limited to this. The controller 40 may control the engine 31 to rotate at a constant speed only in one level, or control the engine 31 to rotate at any arbitrary rotation speed.

(4) In each above-mentioned embodiment, an example is described in which the refrigeration device 1 detects the temperature of the interior space 6 with the internal temperature sensor 22, but this is not limiting. For example, the refrigeration device 1 may be configured to estimate the temperature of the internal space 6 from the detection value of a pressure sensor that detects the refrigerant pressure on the refrigerant suction side of the compressor 11.

(Conclusion)

According to a second aspect, when the start/stop operation mode is selected by the mode changeover switch, the controller controls the inverter such that the target rotation speed of the compressor is within a maximum rotation speed region.

As a result, when the start/stop operation mode is selected, the target rotation speed of the compressor is fixed in the maximum rotation speed region, so that the refrigeration capacity of the refrigeration cycle is increased, and the internal temperature is reduced quickly. Therefore, the refrigeration device can reduce the fuel consumption of the engine by reducing the operation time of the engine and relatively increasing the stop time of the engine.

In general, a constant speed engine, in which the engine is maintained at a constant rotation speed, has a characteristic where fuel efficiency improves as the load increases. If the compressor is set to the maximum rotation speed region, the load on the engine increases. Therefore, this refrigeration device can improve fuel efficiency. Here, as described above, the maximum rotation speed region refers to a range of rotation speeds from approximately 20% higher to approximately 20% lower than the designed maximum rotation speed of the compressor.

According to a third aspect, when the start/stop operation mode is selected by the mode changeover switch, the controller controls the inverter such that the target rotation speed of the compressor is within a maximum rotation speed region. Conversely, when the continuous operation mode is selected by the mode changeover switch, the controller controls the inverter such that the target rotation speed of the compressor is a rotation speed according to the difference between the set temperature and the internal temperature.

According to this, the refrigeration device can reduce the fuel consumption of the engine when in the start/stop operation mode. Conversely, when in the continuous operation mode, the refrigeration device can precisely manage the internal temperature by using the inverter to finely control the target rotation speed of the compressor. Therefore, it is possible to avoid providing a suction throttle valve which would be disposed on the upstream side of the compressor in a typical implementation of the refrigeration cycle. Further, it is possible to avoid providing an unload mechanism provided in the compressor as described in Patent Document 1 above.

**Claims**

1. A refrigeration device that cools air in an internal space, comprising:

     an engine (31) for power generation;
     a generator (32) driven by the engine to generate electricity;
     an inverter (33) that generates an alternating current of a variable frequency from the electric power generated by the generator;
     a compressor (11) including

          a motor (16) driven by power supplied from the inverter, and
          a refrigerant compression unit (17) rotatably driven by the motor to suck in, compress, and discharge refrigerant;

     a radiator (12) that dissipates heat from the refrigerant discharged from the compressor by exchanging heat between the refrigerant and outside air;
     an expansion valve (13) that depressurizes the refrigerant that flows out of the radiator;
     an evaporator (14) that cools the air in the internal space by exchanging heat between the refrigerant that flows out of the expansion valve and the air in the internal space, the evaporator causing the evaporated refrigerant to flow out toward the compressor;
     a mode changeover switch (44) switchable between a start/stop operation mode that allows the engine to start and stop, and a continuous operation mode in which the engine is continuously operated; and
     a controller (40) that controls the inverter such that when the start/stop operation mode is selected by the mode changeover switch, a target rotation speed of the compressor is fixed at a high rotation speed which is higher than a rotation speed according to a difference between a set temperature (Tset) and an internal temperature (Tret).

2. The refrigeration device of claim 1, wherein the controller controls the inverter such that, when the start/stop operation mode is selected by the mode changeover switch, the target rotation speed of the compressor is within a maximum rotation speed region.

3. The refrigeration device of claim 1 or 2, wherein the controller is configured to

     when the start/stop operation mode is selected by the mode changeover switch, control the inverter such that the target rotation speed of the compressor is within a maximum rotation speed region, and
     when the continuous operation mode is selected by the mode changeover switch, control the inverter such that the target rotation speed of the compressor is a rotation speed corresponding to the difference between the set temperature and the internal temperature of the internal space .

## FIG. 1

# FIG. 2

# FIG. 3

```
                    ( DRIVING START )
                           │
                           ▼
              ┌────────────────────────┐
              │     START ENGINE       │ ～S10
              │    AND COMPRESSOR      │
              └────────────────────────┘
                           │
                           ▼
                        ╱ S20 ╲
                      ╱  START/STOP  ╲   NO
                    ◁  OPERATION MODE? ▷──────────┐
                      ╲              ╱             │
                        ╲  YES  ╱                  │
                           │                       │
                           ▼                       │
              ┌────────────────────────┐           │
              │  TARGET ROTATION SPEED │           │
              │     OF COMPRESSOR      │ ～S30      │
              │ = MAXIMUM ROTATION SPEED│          │
              └────────────────────────┘           │
                           │                       │
                          ╱ S40 ╲                  │
                  NO    ╱          ╲                │
              ◁───────◁  Tret < Tb ? ▷             │
                        ╲          ╱                │
                          ╲  YES ╱     ┌────────────────────────┐
                           │           │  TARGET ROTATION SPEED │
                           ▼           │     OF COMPRESSOR      │
              ┌────────────────────┐   │ = DETERMINED BASED ON  │ ～S80
              │    STOP ENGINE     │～S50│  DIFFERENCE BETWEEN    │
              │   AND COMPRESSOR   │   │    INTERNAL TEMP.       │
              └────────────────────┘   │    AND SET TEMP.        │
                           │           └────────────────────────┘
                          ╱ S60 ╲
                  NO    ╱          ╲
              ◁───────◁  Tret > Tu ? ▷
                        ╲          ╱
                          ╲  YES ╱
                           │
                           ▼
              ┌────────────────────┐
              │    START ENGINE    │～S70
              │   AND COMPRESSOR   │
              └────────────────────┘
```

# FIG. 4

EP 3 623 729 A1

## INTERNATIONAL SEARCH REPORT

| International application No. |
|---|
| PCT/JP2018/013175 |

A.  CLASSIFICATION OF SUBJECT MATTER
Int.Cl.  F25D11/00(2006.01)i, F25B1/00(2006.01)i, F25B27/00(2006.01)i

According to International Patent Classification (IPC) or to both national classification and IPC

B.  FIELDS SEARCHED

Minimum documentation searched (classification system followed by classification symbols)
Int.Cl.  F25D11/00, F25B1/00, F25B27/00

Documentation searched other than minimum documentation to the extent that such documents are included in the fields searched
Published examined utility model applications of Japan          1922-1996
Published unexamined utility model applications of Japan        1971-2018
Registered utility model specifications of Japan                1996-2018
Published registered utility model applications of Japan        1994-2018

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | US 5860594 A (CARRIER CORPORATION) 19 January 1999, fig. 1-4, column 2, line 38 to column 4, line 21 & EP 924484 A2 | 1-3 |
| A | JP 2010-249482 A (MITSUBISHI HEAVY INDUSTRIES, LTD.) 04 November 2010, paragraph [0003] & WO 2010/122932 A1 & EP 2423623 A1, paragraph [0003] | 1-3 |
| A | JP 10-197123 A (MITSUBISHI HEAVY INDUSTRIES, LTD.) 31 July 1998, paragraphs [0007]-[0017] (Family: none) | 1-3 |

☒  Further documents are listed in the continuation of Box C.      ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 01 June 2018 (01.06.2018) | 12 June 2018 (12.06.2018) |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

13

**INTERNATIONAL SEARCH REPORT**

International application No.

PCT/JP2018/013175

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2016-56998 A (DENSO CORP.) 21 April 2016, paragraphs [0020]-[0054] & WO 2016/038838 A1 & EP 3193104 A1, paragraphs [0020]-[0054] & CA 2960462 A1 & CN 106716028 A | 1-3 |

Form PCT/ISA/210 (continuation of second sheet) (January 2015)

**REFERENCES CITED IN THE DESCRIPTION**

**Patent documents cited in the description**

- JP 2017093263 A
- JP 2013002803 A